# EUROPEAN PATENT SPECIFICATION

(11) **EP 3 753 392 B1**
(45) Date of publication and mention of the grant of the patent: **23.02.2022**
(21) Application number: 20174151.9
(22) Date of filing: 12.05.2020
(51) Int. Cl.: A01D 87/12, A01F 29/08, B66F 9/18, B66F 9/19, A01D 87/00

(54) **BALE FORK WITH PACKAGING REMOVAL SYSTEM**
BALLENGABEL MIT VERPACKUNGSENTFERNUNGSSYSTEM
FOURCHE À BALLES À SYSTÈME D'ENLÈVEMENT D'EMBALLAGE

(30) Priority: 20.05.2019 IT 201900006989
(43) Date of publication of application: 23.12.2020
(73) Proprietor: Maior S.r.l., 40059 Bologna (IT)
(72) Inventor: DALL'OLIO, Stefano, I-40059 Bologna (IT)
(74) Representative: Mati, Silvia

(56) References cited:
- EP-A1- 3 103 321
- WO-A1-2008/071856
- US-A- 5 445 490
- US-A1- 2013 149 082

## Description

### TECHNICAL FIELD

The present invention relates to the sector of machinery for moving bales. In particular, the invention relates to a bale fork able to remove packaging from an agglomerate of material, e.g. a bale.

### BACKGROUND

In various sectors of the art, it is common practice to agglomerate materials in so-called bales, where unitary elements of such materials are constrained to one another by packaging comprising, for example, one or more bands, cables, ropes, films and the like. For example, in the agricultural sector, hay is collected in prismatic or cylindrical bales held in shape by means of an assembly of ropes connected to one another, or by a synthetic film banding. Another example is the sector of waste treatment wherein waste of the same material - paper, plastic, aluminium, etc. - is collected in prismatic bales and held in shape by cables connected or welded to one another.

The bales enable a desired quantity of materials that tend not to normally remain aggregated to be stored, moved and, more generally, treated particularly effectively.

At the time of using the material that forms the bale - e.g. as forage for farm animals in the case of hay - the packaging is removed to allow the separation of the material of the bale. Typically, the bale opening operation is performed manually by an operator, using a cutting instrument, such as a knife, a saw or a pair of shears.

Furthermore, during this operation, the packaging must be removed completely to guarantee the correct performance of the subsequent operations in which the material is used. For example, in the case of bales of hay, portions of robes and/or plastic films must clearly not be present in the hay administered to the farm animals in order to avoid compromising their health. In the case of waste treatment, packaging residue can compromise, or reduce the efficiency of, a recycling process of the material of the bale. For these reasons, the bale opening operation is a particularly expensive process in terms of time and resources - both human resources and tools - especially when it is necessary to release a considerable number of bales for performing subsequent processes.

US 5 445 490 A discloses a bale gripper with a mounting frame, which can be vertically traversed on the mast of a fork lift. Projecting forward from the mounting frame are two parallel gripper arms which can be moved towards or away from each other. Extending the height of the bale supporting surface of one of the gripper arms is a baling wire cutter with a blade which is forced against the tensioned wire by a hydraulic cylinder. Also extending the height of the opposing gripper arm is a hydraulically actuated clamp for holding the cut wire.

### OBJECTS AND SUMMARY OF THE INVENTION

An object of the present invention is to overcome the disadvantages of the prior art.

In particular, it is an object of the present invention to present a bale fork able to effectively and reliably remove the packaging from a bale of material.

These and other objects of the present invention are achieved by a device incorporating the features of the accompanying claims, which form an integral part of the present description.

The invention relates to a fork with the characteristics of independent claim 1.

Thanks to this solution, it is possible to remove the packaging of a bale completely automatically without any need for manual actions or instrument-assisted actions by trained personnel. This substantially enables the times, human resources and tools necessary for treating bales of a predetermined material to be substantially reduced.

In a variant of the invention, at least part of the plurality of teeth is aligned to form a row of teeth and each tooth of the row of teeth comprises a respective through hole configured to slidably receive the comb element, the comb element being at least partially slidably housed in the through hole of the row of teeth.

Advantageously, the proposed solution has a very simple structure of the at least one clamping member that requires minimal but at the same reliable maintenance, being able to selectively clamp at least one packaging portion of the bale.

According to the invention, the at least one clamping member is movable between a position proximal to the bale coupled to the coupling member and a position distal from the bale coupled to the coupling member. Preferably, in the proximal position, the at least one clamping member is configured to switch between a clamping condition in which it clamps the at least one first portion of the bale packaging coupled to the coupling member and a releasing condition in which it does not clamp the packaging portion.

In this way it is possible to effectively clamp the packaging of a bale loaded onto the fork. In one variant of the invention, the at least one clamping member can be actuated by switching from the proximal position to the distal position maintaining the clamping condition, thus separating the packaging from the material constituting the bale coupled to the coupling member.

In this way it is advantageously possible to effectively separate the packaging from the bale by operating in a completely automatic way.

According to the invention, the at least one clamping member is hinged to the frame to switch from the proximal position to the distal position, rotating about an axis of rotation and is connected to the frame tilting about an axis orthogonal to the axis of rotation.

Preferably, the fork comprises a pair of actuators coupled to the at least one clamping member. In particular, the actuators can be independently activated so as to impose a rotation on the at least one clamping member in a parallel plane to a plane defined by the frame.

Thanks to this solution, it is possible to guarantee a reliable and precise grip and clamping also in the event of bales with irregular, curved or otherwise deformed conformations. In a variant of the invention, the at least one opening member comprises a cutting element that can be actuated to sever the bale packaging coupled to the coupling member. Thanks to this solution it is possible to simply destroy the seal of the packaging on the material constituting the bale.

In one variant of the invention, the at least one opening member is configured to switch between a contact position in which the cutting element comes into contact with the at least one first portion of the bale packaging coupled to the coupling member and a rest position in which the cutting element is separated from the packaging.

In this way the cutting element enters into contact with the bale packaging only when the packaging is effectively to be cut; thereby eliminating the risk of compromising the packaging during a simple movement of the bale.

In a variant of the invention, the cutting element has an extension greater than or equal to a dimension of the bale so as to sever an entire second packaging portion along a direction associated with such dimension.

Thanks to this solution, it is possible to guarantee a cut of the packaging along an entire dimension of the bale, thus simplifying and making more reliable a subsequent separation operation between the packaging and the material constituting the bale.

In one variant of the invention, the at least one opening member comprises an actuator configured to activate the cutting element to oscillate along a transverse direction to a switching direction between the contact position and the rest position.

Thanks to this solution it is possible to perform the cutting operation simply, reliably and with an opening member having particularly contained dimensions.

In one variant of the invention, the at least one opening member is hinged to the frame for switching from the contact position to the rest position according to an oscillating movement.

In a variant of the invention, the at least one opening member is mounted on the at least one clamping member, the at least one opening member switching between the rest position and the contact position when the at least one clamping member is in its proximal position. Preferably, the at least one opening member is hinged to the at least one clamping member for switching from the contact position to the rest position according to an oscillating movement.

In a variant of the invention, the fork comprises a clamping member mounted on the frame at a first distance from the coupling member and a second clamping member mounted to the frame at a second distance from the coupling member different from the first. Preferably, the fork further comprises a first opening member associated with the first clamping member and a second opening member associated with the second clamping member. In particular, the second opening member is mounted on the second clamping member, preferably hinged to the second clamping member.

Advantageously, the fork is in this way particularly versatile as it can be used for treating bales of different shapes and sizes.

In a variant of the invention, the fork also comprises a decoupling member configured for decoupling the bale from the coupling member.

In this way, it is possible to simplify the unloading operation during the storage of a whole bale, and the release of the material that constitutes the bale once it has been released from the packaging.

In a variant of the invention, at least one selected from:
- the coupling member,
- the at least one clamping member,
- the at least one opening member, and
- the decoupling member
is hinged to the frame.

In this case the fork preferably comprises at least one actuator hinged to the frame and to the at least one member, the at least one actuator being configured to rotate in a pivoted way to the at least one member.

Thanks to this solution, it is possible to activate the selected member with a simple, compact and reliable structure. Furthermore, such solution enables the activation through a power distribution system to which the fork is fixed without requiring any specific intermediate elements.

A different aspect of the present invention relates to a machine comprising a connection interface to which a fork according to any one of the above embodiments is coupled.

Additionally, a method of actuating a fork for bales according to one of the embodiments reported above is disclosed.

The method comprises the steps of:
- actuating a coupling member of the fork for coupling it mechanically to a bale, and
   advantageously, the further steps of:
- coupling and clamping a packaging portion of a bale coupled mechanically to the coupling member by activating the at least one fork clamping member; and
- releasing the packaging from the bale by activating the at least one opening member while the packaging is clamped by the clamping member.

Further features and advantages of the present invention will be more apparent from the description of the accompanying drawings.

### BRIEF DESCRIPTION OF THE DRAWINGS

The invention will be described below with reference to some examples, provided by way of non-limiting example, and illustrated in the appended claims. These drawings illustrate different aspects and embodiments of the present invention and, where appropriate, reference numerals illustrating similar structures, components, materials and/or elements in different figures are indicated by similar reference numbers.
Figure 1 is an axonometric view of a machine comprising a fork according to a first embodiment of the present invention,
Figure 2 is a lateral view of the machine of Figure 1,
Figure 3 is an axonometric view of the fork according to the first embodiment of the present invention with the members in a rest position,
Figure 4 is an axonometric view of the fork according to the first embodiment of the present invention with the members in an operating position,
Figure 5 is a lateral raised view of the fork of Figure 4,
Figures 6 and 7 are front and rear axonometric views, respectively, of a frame and of a thrust member of the fork according to the first embodiment of the present invention,
Figure 8 is an axonometric view of a clamping member of the fork according to the first embodiment of the present invention,
Figure 9 is a detail of the clamping member of Figure 8,
Figure 10 is a front view of the fork of Figure 3 with the clamping member in an inclined configuration,
Figures 11 and 12 are axonometric views, respectively front and rear views, of a fork opening member according to the first embodiment of the present invention,
Figure 13 is an axonometric view of the fork decoupling member of Figure 3 in a thrust position,
Figures 14 and 15 are schematic views of a portion of the clamping member coupled to a bale, respectively in a releasing condition and in a clamping condition,
Figure 16 is a lateral view of the fork according to the first embodiment of the present invention with the members thereof interacting with a bale,
Figure 17 is an axonometric view of a fork according to a second embodiment of the present invention with the clamping and opening members in a rest position,
Figure 18 is a front axonometric view of a second opening member of the fork of Figure 17, and
Figures 19a-19d are lateral raised views of the fork of Figure 17 respectively in the configuration of both the clamping members and both the opening members in the rest condition (Figure 19a), in the configuration with the first clamping member and the first opening member in the operating condition (Figure 19b), in the configuration with only the second clamping member in the operating condition (Figure 19c) and in the configuration with both the second clamping member, and the second opening member in the operating condition (Figure 19d).

### DETAILED DESCRIPTION OF THE INVENTION

In the following description, for the illustration of the figures, identical numbers or reference symbols are used to indicate construction elements with the same function. Further, for illustration clarity, some references may not be repeated in all the figures.

While the invention is susceptible to various modifications and alternative constructions, certain preferred embodiments are shown in the drawings and are described hereinbelow in detail. It is in any case to be noted that there is no intention to limit the invention to the specific embodiment illustrated, rather on the contrary, the invention intends covering all the modifications, alternative and equivalent constructions that fall within the scope of the invention as defined in the claims.

The use of "for example", "etc.", "or" indicates non-exclusive alternatives without limitation, unless otherwise indicated. The use of "includes" means "includes, but not limited to" unless otherwise stated.

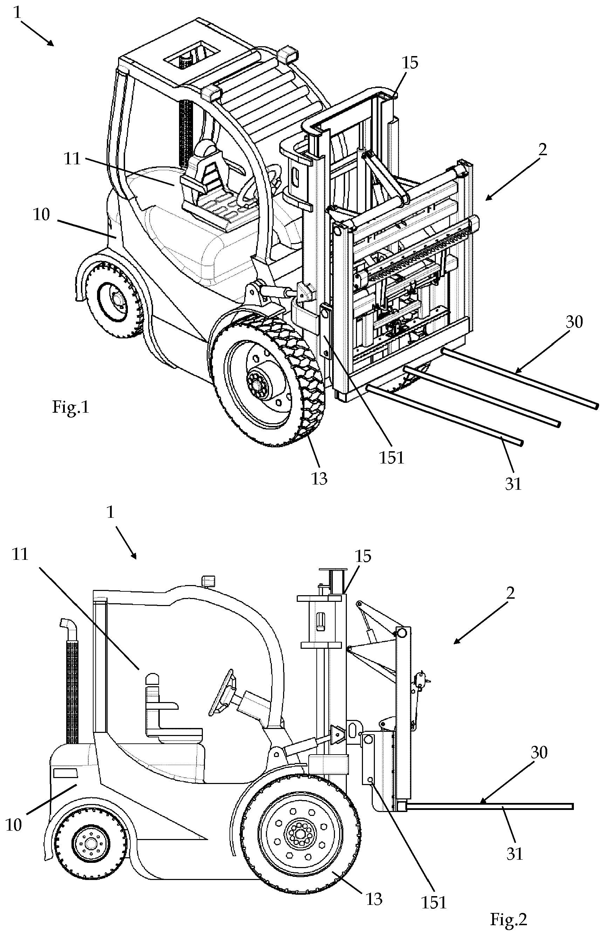

With reference to Figures 1 and 2, a machine is described, in particular an agricultural machine 1, on which a bale fork 2 is mounted according to a first embodiment of the present invention.

The agricultural machine 1 comprises a body 10 in which an engine is housed (not visible in the figures) and, preferably, a driving compartment 11. The agricultural machine 1 further comprises wheels 13, four in the example of Figures 1 and 2, at least two of which activated by the engine for enabling a movement of the agricultural machine 1.

The agricultural machine 1 comprises an upright 15 to which the fork 2 is coupled. The upright 15 is configured to raise and lower the fork 2 along a main extension direction of the upright itself thanks to actuators, e.g. hydraulic jacks activated by the engine of the agricultural machine 1. Furthermore, the agricultural machine 1 can comprise one or more actuators and possibly, a power distribution system, e.g. a hydraulic circuit (not illustrated) to enable an activation of the movable members of the fork 2 described below.

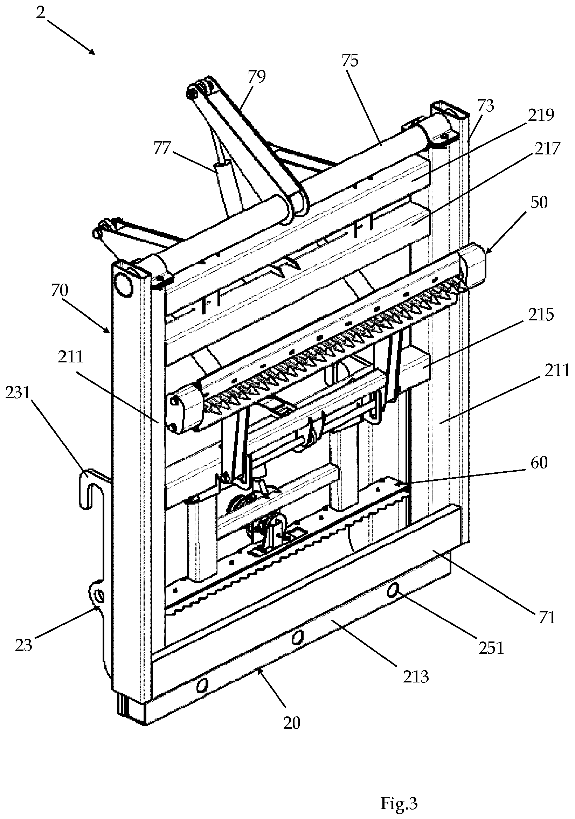

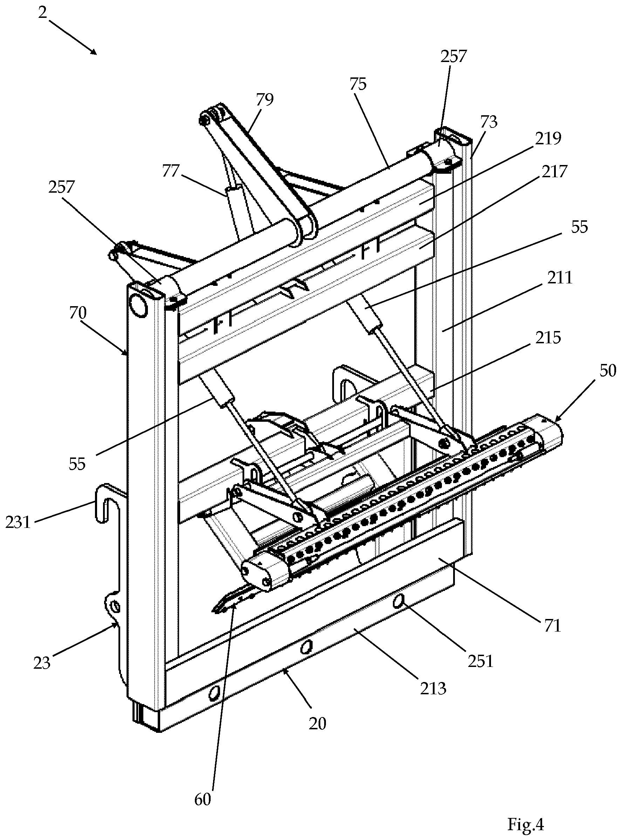

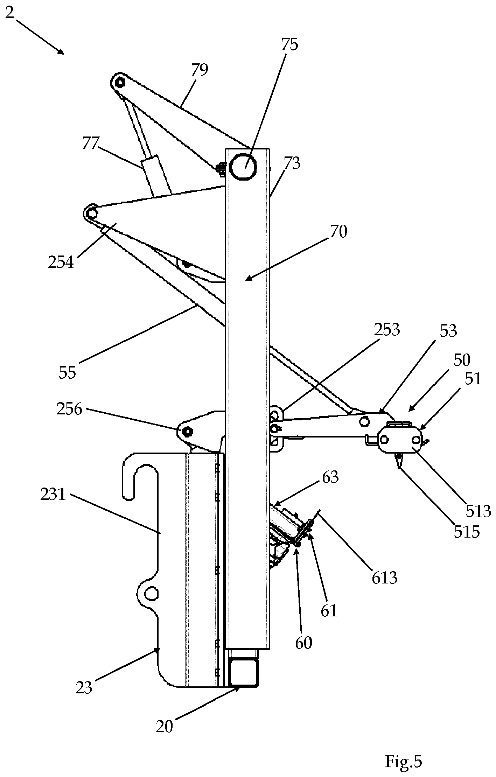

Considering Figures 3 - 16, the fork 2 according to the first embodiment of the present invention and the operation thereof are described in detail.

The fork 2 comprises a frame 20 configured for mechanically coupling to the upright 15 of the agricultural machine 1 and for supporting the other components of the fork 2.

In more detail, the frame 20 comprises a load-bearing structure that supports the members of the fork 2, preferably in a movable way. In the example considered, the load-bearing structure has a rectangular shape and preferably comprises a plurality of bars - preferably the bars are square section tubular elements made of strong material such as steel.

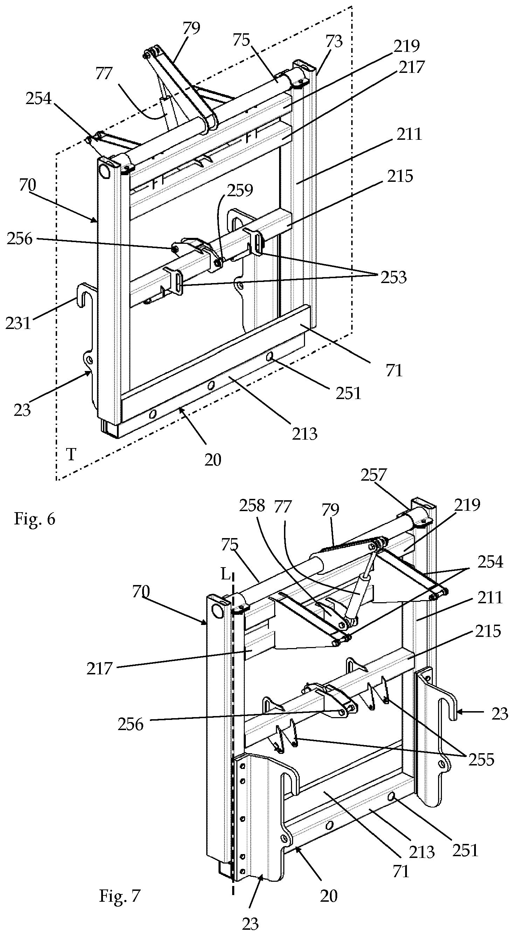

In the example considered, the frame comprises a pair of lateral bars 211 with a parallel alignment of the upright 15 of the agricultural machine 1 - when the fork 2 is coupled to the agricultural machine 1 - whereas four cross bars 213, 215, 217 and 219 are coupled to the lateral bars 211 and have a transverse alignment thereto. This structure of the frame 20 therefore defines a plane T of the frame illustrated in Figure 6.

In the example considered, each of the lateral bars 211 comprises a respective connection plate 231 that forms part of a connection interface 23 of the fork 2 to the upright 15 of the agricultural machine 1. Each connection plate 231 comprises a portion fixed to the respective lateral bar 211 and a free portion configured for coupling to a corresponding connection interface 151 provided on the upright 15 of the agricultural machine 1 (shown in Figures 1 and 2).

Advantageously, the number and position of the cross bars 213-219 is selected based on the weight, position and specific dimensions of the other components of the fork 2 supported by the frame 20.

In the example considered, proceeding from the bottom upwards into the operating position of the fork, a first lower cross bar 213 supports a coupling member 30 (shown in Figures 1 and 2) configured for mechanically coupling to a bale B to be moved, whereas the remaining three central cross bars, central 215 and upper 217 and 219, support a first clamping member 50 and a first opening member 60 described in detail below. The fork 2 further comprises a decoupling member 70 rotatably connected to the lateral bars 211.

In the example considered, the coupling member 30 comprises three bars having a first pointed end, referred to below for the sake of brevity as "tips" 31. Each of the tips 31 is coupled to a corresponding receiving hole 251 provided on the lower cross bar 213. A second not pointed end of each tip 31 is inserted into the respective hole 251 so as to obtain a rigid coupling between the frame 20 and the tips 31, with the latter that project in a cantilever fashion from the frame 20 transverse to the plane T defined thereby.

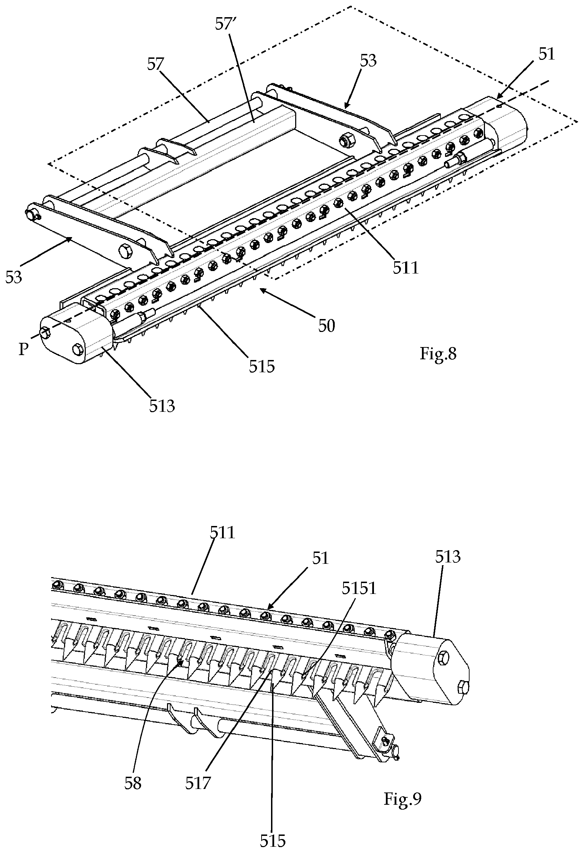

The first clamping member 50 of the fork 2 (illustrated in detail in Figures 8 and 9) is configured to engage a bale B and to clamp the packaging I of the bale B. For that purpose, the clamping member 50 integrates a clenching element 515 configured to lock the bale B in position.

In the example considered, the clamping member 50 comprises a head 51 and a pair of arms 53 transverse to the head 51. In particular, the head 51 comprises an elongated body 511, along an extension direction P - parallel to the extension direction of the cross bars 213-219 - and extends between the two actuation ends 513. Preferably, the actuation ends 513 comprise a hydraulic circuit powered by the agricultural machine 1 through appropriate connection pipes when the fork 2 is mounted on the agricultural machine 1. From the elongated body 511 a series of teeth project, preferably, in the transverse direction to the elongated body 511 adapted to operate as a clenching member 515, as described below.

Preferably, the teeth 515 are aligned along a parallel direction to the extension direction P of the elongated body 511 defining a single row. Each tooth 515 has a substantially cylindrical body and a substantially conical tip. In the embodiment illustrated, each tooth 515 further comprises a through hole 5151 with openings aligned along the extension direction of the elongated body 511.

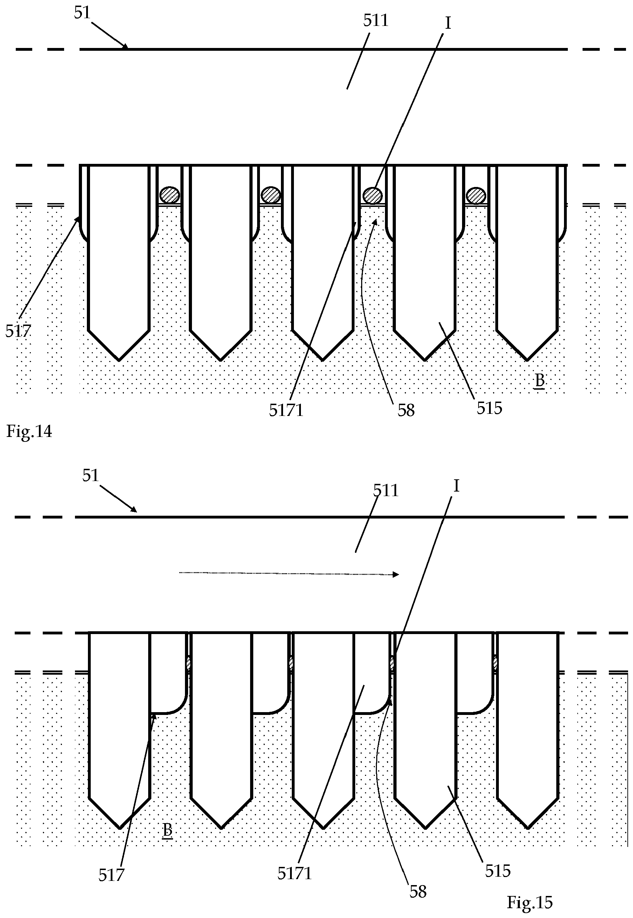

Furthermore, the head 51 comprises a comb element 517 comprising a plurality of prongs 5171 (shown in Figures 14 and 15). The comb element 571 is slidably housed within the elongated body 511 of the head 51 with opposite ends (not visible) operatively coupled to the actuation ends 513 of the head 51. In particular, the prongs 5171 are adapted to slide in the through hole 5151 and have a width substantially corresponding to a space 58, or space, between two mutually adjacent teeth 515. Preferably, the comb element 517 comprises a number of prongs 5171 corresponding to the number of teeth 515 minus one - e.g. corresponding to the number of spaces 58 delimited by the teeth 515.

Advantageously, the actuation ends 513 are configured to slidably move the comb element 517 between a clamping condition, in which at least one prong 5171 of the comb occludes at least partially - preferably substantially completely - the spaces 58 between a pair of adjacent teeth 515 and a releasing condition, in which the prong 5171 does not occlude the spaces 58 between the pair of adjacent teeth. In the clamping condition, each tooth 515 and a respective prong 5171 form a corresponding clamping element configured to clamp a packaging portion I of the bale B as described below.

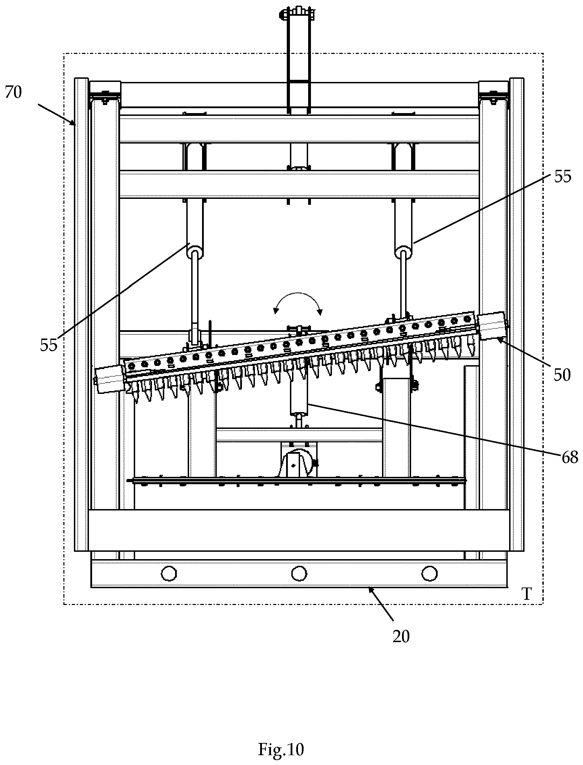

Preferably, the free ends of the arms 53 of the clamping member 50 - distal from the head 51 - are connected to one another by a pair of connection bars 57, 57', which are hinged to a support 259 (illustrated in Figure 6) of the central cross bar 215 arranged substantially in the middle of it. Furthermore, a first connection bar 57 is guided within supports 253 of the central cross bar 215 placed at the sides of the support 259, which comprise an elongated slot-shaped opening along a parallel direction to an extension direction L of the cross bars 211 of the frame 20 for allowing the clamping member 50 to tilt about an axis transverse to the central cross bar 215, as shown in Figure 10.

A pair of actuators 55 - e.g. hydraulic jacks - of the clamping member 50 are hinged, at one end, to other supports 254 projecting from the pair of upper cross bars 217 and 219 and, at another end, to respective ends of the arms 53 of the clamping member 50, proximal to the head 51.

Thanks to this configuration - in particular, thanks to the hinged rotation of the arms 53 - the head 51 of the clamping member 50 can move along an arch transverse to the plane T of the frame 20, between a rest position, in which the arms 53 are substantially parallel to the plane T of the frame 20, and an engagement position, in which the arms 53 are substantially orthogonal to such plane.

Additionally, the supports 253 enable a sliding of the first connection bar 57 along the direction L (shown in Figure 7) parallel to the extension direction of the lateral bars 211, whereas the actuators 55 can be actuated independently from one another. Thanks to this configuration, it is possible to control the activation of the actuators 55 so as to obtain a rotation by a desired angle of the head 51 on a parallel plane to the plane T of the frame 20 - as can be seen in Figure 10.

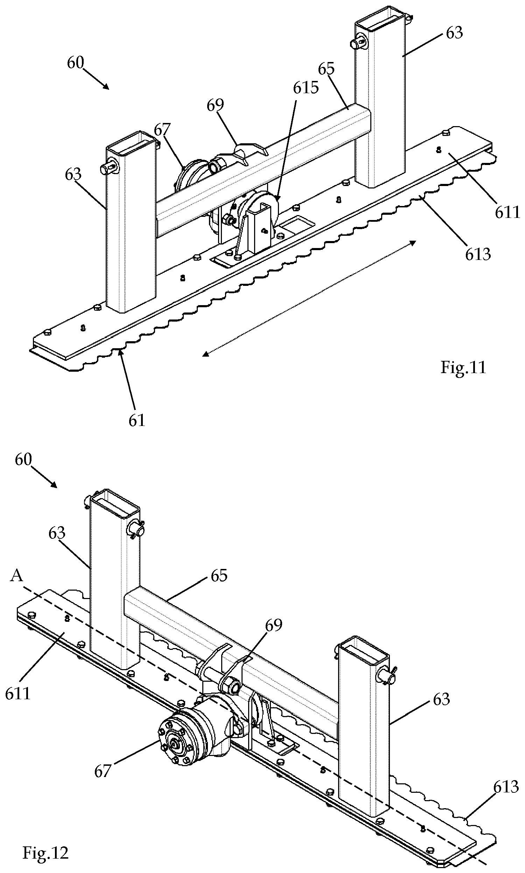

The first opening member 60 of the fork 2 (shown in detail in Figures 11 and 12) is configured to act on the packaging I so as to separate the latter from the bale B. The opening member 60 comprises a head 61, a pair of arms 63 transverse to the head 61, a connection bar 65 connected to the two arms and, preferably, an actuator 67.

In detail, the head 61 comprises a support 611 elongated along an extension direction A, parallel to the extension direction of the cross bars 213-219 and of the head 51 of the clamping member 50. Advantageously, the support 611 is open at least at an own side thereof facing the opposite direction to the frame 20 when the opening member 60 is in its rest position wherein the head 61 is substantially arranged at the plane T of the frame 20. In the example considered, a saw 613 is housed in the support 611 with a blade that projects from the open side of the support 611.

The actuator 67 can for example be a motor or a reducer operatively connected to the engine of the agricultural machine 1 and is fixed to the connection bar 65 that joins the arms 63 and to the head 61. The actuator 67 is further operatively connected to the saw 613 through a kinematic mechanism 615 configured to impart to the saw 613 an oscillatory movement (indicated by a double arrow in Figure 11) along the extension direction A (shown in Figure 12).

Furthermore, free ends of the arms 63 of the opening member 60, distal from the head 61, are hinged to supports 255 (shown in Figure 7) of the central cross bar 215. In particular, the supports 255 project from the central cross bar 215 in the opposite direction with respect to the supports 253 and inclined towards the lower cross bar 213.

Likewise, an actuator 68 shown in Figure 10, e.g. of the hydraulic jack type, is hinged, by means of a first end, to a support 256 projecting from the central cross bar 215 in the opposite direction with respect to the support 259 and, by means of a second end, to an arm 69 projecting from the connection bar 65.

Thanks to this configuration, the opening member 60 can rotate hinged along an arch transverse to the plane T of the frame 20 between the rest position in which the arms 63 are substantially parallel to the plane T of the frame 20 and the head 61 is arranged substantially at such plane T and a contact position in which the arms 63 are substantially inclined with respect to such plane T and the head is in the distanced condition therefrom T.

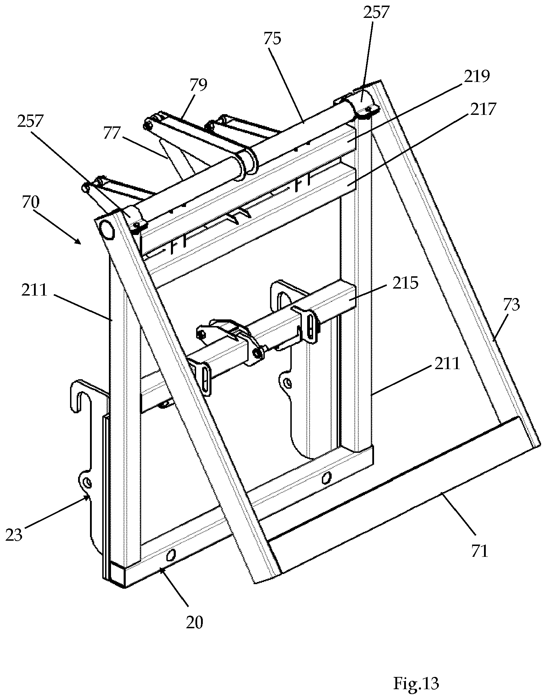

The decoupling member 70 of the fork 2, illustrated in detail in Figure 13, is configured to remove a bale from the coupling member 30. The decoupling member 70 has a substantially similar conformation to that of the frame 20, which in the example considered is quadrangular and comprises a thrust plate 71, two arms 73 and a rotation stem 75.

Unlike the other members, the decoupling member 70 is hinged to the lateral bars 211. In detail, the rotation stem 75 is hinged to supports 257 fixed to ends of the lateral bars 211 distal from the cross bar 213 to which the tips 31 are fixed. The arms 73 are parallel to the lateral bars 211 and coupled to the opposite ends of the rotation stem 75 at the ends thereof distal from the thrust plate 71.

Furthermore, an actuator 77, e.g. of the hydraulic jack type, of the decoupling member 70 is hinged by means of a first end to a support 258 (shown in Figure 7) of the upper cross bar 217 to which the supports 254 for the actuators 55 of the clamping member 50 are also fixed, and is hinged by means of a second end to an arm 79 projecting from a central portion of the rotation stem 75.

Thanks to this configuration, the decoupling member 70 can rotate pivoted along an arch transverse to the plane T of the frame 20 between a rest position in which the arms 73 are substantially parallel to the plane T of the frame 20 and an ejection position in which the arms 73 are substantially inclined with respect to the same plane T (shown in Figure 13).

The structure of the fork 2 according to an embodiment of the present invention having been described, the operation thereof is now described, with particular reference to Figures 14 - 16.

The fork 2, mounted on the agricultural machine 1, is used for collecting the bale B, for example, by placing the tips 31 below the bale B or making the tips 31 penetrate into the bale B. In this way, the bale B is mechanically coupled to the fork 2, enabling the movement thereof.

Subsequently, the clamping member 50 is activated, moving it from the rest position to the engagement position where the clamping member 50 engages the bale B. In the engagement position, the teeth 515 penetrate at least partially into the bale B, locking it in position (as illustrated in Figure 14). In this way, the coupling between the bale B and the fork 2 is even more stable.

At the same time, the comb element 517 of the clamping member 50 is kept in the release position so that a part of the packaging I can be housed in the spaces 58 delimited by pairs of adjacent teeth 515 (as illustrated in Figure 14). In the example configured, the packaging I is comprised of ropes.

Once the engagement position has been reached, the comb element 517 is switched into the clamping condition to clamp the packaging ropes I present in the spaces 58 delimited by pairs of adjacent teeth 515. In the example considered, at least one of the two actuation ends 513 of the head 51 of the clamping member 50 is activated - for example, by transferring a pressurized fluid through the hydraulic circuit of the agricultural machine 1 - therefore making the comb element 517 slide along the direction P parallel to the extension direction of the cross bars 213-219 of the frame 20. In particular, each of the prongs 5171 of the comb element 517 occludes at least partially a respective space 58 between two adjacent teeth 515, thus clamping each packaging rope I comprised between a respective pair of prongs 5171 and tooth 515 (as illustrated in Figure 15).

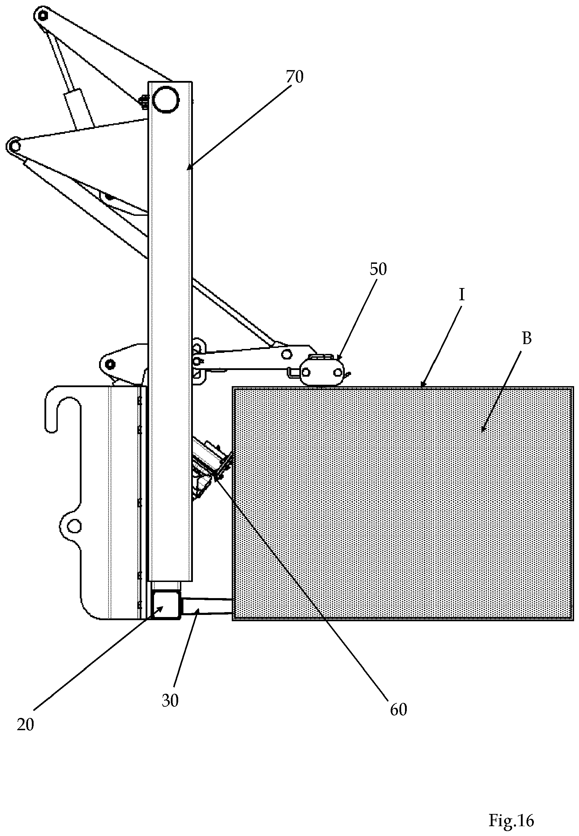

At this point, the opening member 60 is activated to switch from the rest position to the contact position in which the blade of the saw 613 enters into contact with the bale B and the packaging ropes I (as illustrated in Figure 16). The saw 613 is therefore activated so as to sever the packaging ropes I.

After this, the clamping member 50 is switched from the engagement position to the rest position, whereas the comb element 517 of the clamping member 50 is kept in the clamped condition (as illustrated in Figure 15). Therefore, during this movement the severed packaging ropes I - clamped between prongs 5171 and teeth 515 - are separated from the material of the bale B.

The decoupling member 70 is then activated for removing the bale B from the fork 2, depositing it in a desired position. In detail, the decoupling member 70 is switched from the rest position to the ejection position. During rotation from one position to the other, the thrust plate 71 engages the bale B and pushes it away from the frame 20, causing a separation, or removal, of the bale B - free from the packaging ropes I - from the tips 31 of the fork 2.

Finally, the comb element 517 of the clamping member 50 is brought into the rest condition to release the packaging ropes I. In the example considered, at least one of the two actuation ends 513 of the head 51 of the clamping member 50 is activated so that each of the prongs 5171 of the comb element 517 is housed at least partially in the through hole 5151 of a corresponding tooth 515, thereby releasing every packaging rope previously clamped between a respective prong 5171 and tooth 515.

Preferably, the packaging ropes I are released into a different position from the depositing position of the bale B by moving the agricultural machine 1 between the two positions.

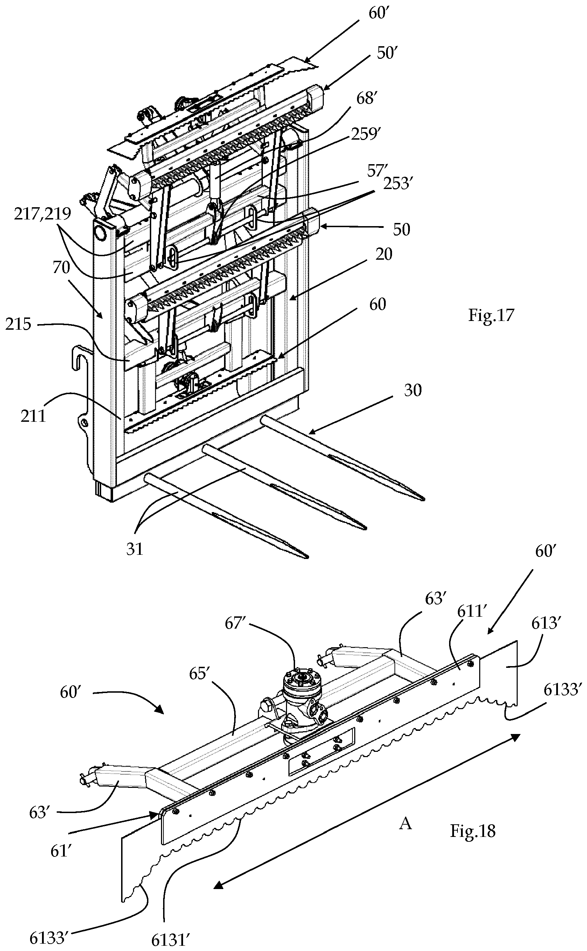

Figure 17 illustrates a second embodiment of the fork 2' according to the present invention which differs from the fork 2 previously described in the following way. For the sake of brevity, the description of the elements already described in relation to the fork 2 shall not be repeated.

In addition to what is described above with reference to the fork 2 according to the first embodiment, the fork 2' of Figure 17 comprises a second clamping member 50' and a second opening member 60'.

Like the first clamping member 50, the second clamping member 50' of the fork 2' is configured to engage bales B. However, the second clamping member 50' is constrained to the frame 20 at an upper cross bar 217,219, hence being able to clamp bales of greater dimensions with respect to the bales that can be treated by means of the first clamping member 50, e.g. cylindrical bales of diameter up to 180 cm.

In the embodiment illustrated, the second clamping member 50' has a similar structure to the structure of the first clamping member 50 illustrated in Figures 8 and 9 to which reference is made. The second clamping member 50' therefore comprises a clamping head 51 supported by arms 53 which are however hinged to the upper cross bar 217,219. The free ends of the arms 53, distal from the clamping head 51, are connected to one another by a pair of connection bars 57,57'.

As for the first clamping member 50, the head 51 of the second clamping member 50' integrates a clenching element configured in the form of a plurality of teeth 515 projecting from an elongated body 511 of the head 51 of the second clamping member 50'. The teeth are arranged mutually aligned along a parallel direction to the extension direction of the elongated body 511 defining a single row and comprising a through hole 5151 with openings aligned along the extension direction of the elongated body 511. In the through holes 5151 a comb element 517 is slidably housed comprising a plurality of prongs 5171 of a width substantially corresponding to a space 58, or opening, between two mutually adjacent teeth 515.

Also with reference to the second clamping member 50', the comb element 517 can be slidably moved between a clamping condition, in which at least one prong 5171 of the comb occludes at least partially - preferably substantially completely - the space 58 between a pair of adjacent teeth 515 and a releasing condition, in which the prong 5171 does not completely occlude the space 58 between the pair of adjacent teeth.

The second clamping member 50' is hinged to the upper lateral bar 217,219 at a central support 259' and is free to tilt about an axis transverse to the upper cross bar 217,219, guided by relevant supports 253' provided with an elongated slot shaped opening along a parallel direction to an extension direction L of the lateral bars 211 of the frame 20.

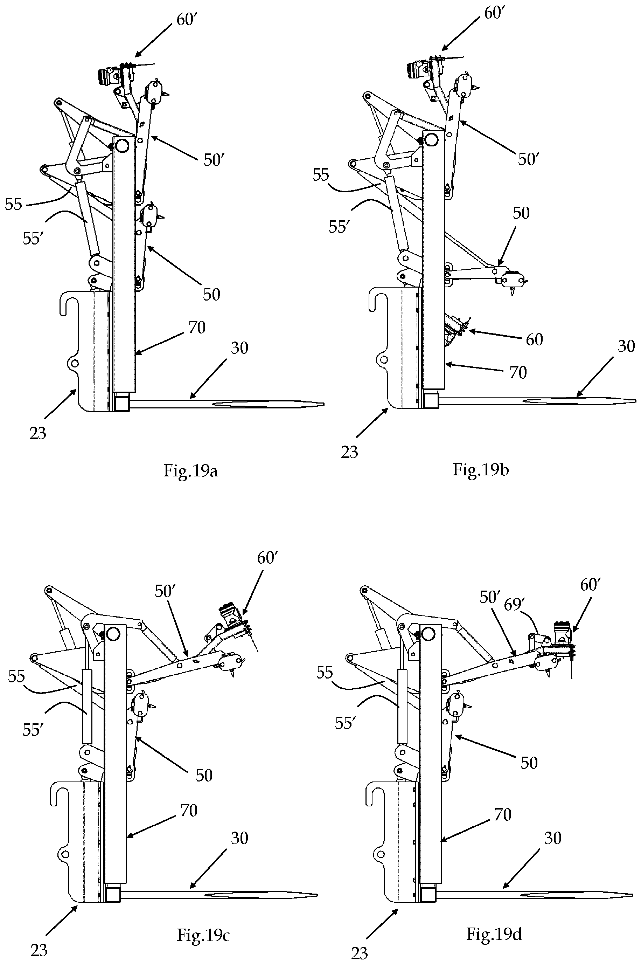

The second clamping member 50' is actuated through a second pair of actuators 55' hinged to an end of the central cross bar 215, and, at another end, to the arms 53 of the second clamping member 50'. In this way, also the head 51 of the second clamping member 50' can move along an arch transverse to the plane T of the frame 20, between a rest position (illustrated in Figures 17, 19a and 19b) in which the arms 53 are substantially parallel to the plane T of the frame 20, and an engagement position (illustrated in Figures 19c and 19d), in which the arms 53 are substantially orthogonal to such plane.

With reference to the second opening member 60', illustrated in more detail in Figure 18 - like the first opening member 60 - it is also configured to act on the packaging I of the bale B so as to separate it from the bale B. Also the second opening member 60' comprises a head 61' connected to a pair of arms 63', arranged transverse to the head 61' and connected by means of a connection bar 65'.

Like the first opening member 60, the head 61' of the second opening member 60' comprises a support 611' elongated along an extension direction A parallel to the extension direction of the cross bars 213-219 in which a saw 613' is housed with a blade that projects from the support 611' at least at a side of the support 611' which, in a rest condition in which the head 61' is arranged substantially at the plane T of the frame 20, is turned in the opposite direction to the frame 20. The saw 613' is operatively connected to an actuator 67' so as to be subject to an oscillatory movement along the extension direction A.

Unlike the first opening member 60, the blade of the saw 613' of the second opening member 60' follows a segmented profile with a central segment 6131' parallel to the extension direction A and two lateral segments 6133' inclined so as to form with the central segment 6131' an angle less than 180°.

The second opening member 60' is mounted on the second clamping member 50' in a rotatable way with respect thereto 50'. For that purpose, the arms 63' of the second opening member 60' are hinged at an end thereof to respective arms 53 of the second clamping member 50' and an actuator 68' is envisaged, shown in Figure 17, e.g. of the hydraulic jack type, hinged at a first end thereof to a second connection bar 57' of the second clamping member 50' and at a second end thereof to a pin 69' constrained to the connection bar 65. Thanks to this configuration, the second opening member 60' can rotate with respect to the second clamping member 50' when the latter is in the engagement position shown in Figures 19c and 19d, thus entering into contact with the packaging I of the bale held by the second clamping member 50' (Figure 19d).

The operation of the second embodiment of the fork 2' is as follows, where only the operation of the elements not yet described in relation to the first embodiment shall be described.

In the case of bales B of large dimensions coupled to the tips 31 of the fork 2' the second clamping member 50' is activated, moving it from the rest position to the engagement position, whereas the comb element 517 of the clamping member 50' is kept in the releasing condition. Like what has been described with reference to the first clamping member 50, during such movement the teeth 515 penetrate at least partially into the bale B, locking it in position, and a part of the packaging I is housed in the spaces 58 delimited by pairs of adjacent teeth 515.

Once the engagement position has been reached, the comb element 517 is switched into the clamping condition to clamp the packaging ropes I present in the spaces 58 delimited by pairs of adjacent teeth 515. In particular, the comb element 517 is made to slide along the direction P parallel to the extension direction of the cross bars 213-219 of the frame 20. In this way each of the prongs 5171 at least partially occludes a respective space 58 between two adjacent teeth 515, thus clamping each packaging rope I comprised between a respective prong 5171 and tooth 515.

At this point, the second opening member 60' is activated to switch from the rest position to the contact position in which the blade of the saw 613' comes into contact with the bale B retained by the second clamping member 50' and the packaging ropes I thereof. The saw 613' is therefore activated so as to sever the packaging ropes I.

After that, like what happens for the first clamping member 50, the second clamping member 50' is switched from the engagement position to the rest position, maintaining the comb element 517 in the clamped condition. In this way, during the movement of the second clamping member 50', the severed packaging ropes I, clamped between the prongs 5171 and the teeth 515, are separated from the material of the bale B.

The decoupling member 70 is therefore activated to remove the bale B from the fork 2 and finally the second clamping member 50' is brought back into the rest position to release the packaging ropes I.

The invention thus conceived is susceptible to several modifications and variations that fall within the scope of the appended claims.

For example, the coupling member can comprise additional or alternative elements to the tips such as grippers for round bales or grippers for wrapped bales.

In alternative embodiments (not illustrated), a clenching member may be formed separately from the clamping member and, therefore, provided with its own support structure, hinges and actuators.

As will be clear to a person skilled in the art, the clamping elements of the clamping member may be realized in various forms. For example, an alternative version of the clamping member may comprise two comb elements adjacent and parallel to each other - at least one of which is movable. Again, the clamping member can comprise a plurality of pairs of movable jaws, possibly hinged to one another, which can be selectively activated. Furthermore, alternative clamping elements (not illustrated) can comprise various rows, each comprising respective pairs of prongs, jaws and/or prong-tip pairs. Furthermore, in other simplified embodiments of the fork, the clamping member may be free from gripping elements and/or the decoupling member may be omitted.

As will become clear, the fork according to different embodiments of the present invention can be mounted on different machines from an agricultural machine, e.g. a fork lift truck.

Moreover, all the details can be replaced by other technically equivalent elements.

In practice, the materials used, as well as the contingent shapes and sizes, can be whatever according to the requirements without for this reason departing from the scope of protection of the following claims.

## Claims

1. Fork (2,2') for bales comprising a frame (20) provided with a connection interface (23) configured for engaging with a movement element of an actuator machine, the following being directly or indirectly mounted on the frame (20):
- a coupling member (30) configured for mechanically coupling to a bale,
- at least one clamping member (50,50') configured for hooking and clamping at least a first packaging portion of a bale when mechanically coupled to the coupling member (30), the at least one clamping member (50,50') being movable between a position proximal to the bale coupled to the coupling member (30) and a position distal from the bale coupled to the coupling member (30), and
- an opening member (60,60') configured for acting upon at least a second portion of the packaging with the at least one first portion of the packaging in a clamped condition by the clamping member (50,50') so as to release the packaging from the bale,
wherein the at least one clamping member (50,50') comprises a plurality of teeth (515) and a comb element (517) provided with a plurality of prongs (5171), and
wherein the comb element (517) and the plurality of teeth (515) are slidably mounted in the at least one clamping member (50,50') with respect to one another so as to switch between a clamping condition in which at least one prong (5171) of the comb element (517) is configured to occlude at least partially a space (58) defined between a pair of adjacent teeth (515) of the plurality of teeth (515), thereby clamping said at least one first portion of the bale packaging between a tooth (515) of the pair of adjacent teeth (515) and said at least one prong (5171) of the comb element (517), and a releasing condition in which the at least one prong (5171) is configured to release said at least one first portion of the bale packaging comprised in said space (58)
**characterized in that** the plurality of teeth (515) is configured to penetrate at least partially into the bale coupled to the coupling member (30) and **in that** the at least one clamping member (50,50') is hinged to the frame (20) to switch from the proximal position to the distal position, by rotating about an axis of rotation and is connected to the frame (20) so as to tilt about an axis orthogonal to the axis of rotation.

2. Fork (2,2') according to claim 1, wherein at least part of the plurality of teeth (515) is aligned to form a row of teeth and each tooth of the row of teeth (515) comprises a respective through hole (5151) configured to slidably receive the comb element (517), the comb element (517) being at least partially slidably housed in the through holes (5151) of the row of teeth (515).

3. Fork (2,2') according to claim 1 or 2, wherein in the proximal position, the at least one clamping member (50') is configured to switch between the clamping condition in which it clamps said at least one first portion of the bale packaging coupled to the coupling member (30) and the releasing condition in which it does not clamp said at least one packaging portion.

4. Fork (2,2') according to claim 3, wherein the at least one clamping member (50,50') can be activated to switch from the proximal position to the distal position, maintaining the clamping condition, thereby separating the packaging from the material constituting said bale coupled to the coupling member (30).

5. Fork (2,2') according to any one of the preceding claims, wherein the at least one clamping member (50,50') is connected to a pair of actuators that can be activated independently so as to impose a tilt on the at least one clamping member (50,50').

6. Fork (2,2') according to any one of the preceding claims, wherein the at least one opening member (60,60') comprises a cutting element (613,613') which can be actuated to sever the bale packaging coupled to the coupling member (30).

7. Fork (2,2') according to claim 6, wherein the at least one opening member (60,60') is configured to switch between a contact position in which the cutting element (613,613') enters into contact with said at least one second portion of the bale packaging coupled to the coupling member (30) and a rest position in which the cutting element (613,613') is distant from said packaging.

8. Fork (2,2') according to claim 7, wherein the at least one opening member (60) is hinged to the frame (20) for switching from the contact position to the rest position according to an oscillatory movement.

9. Fork (2,2') according to claim 7, wherein the at least one opening member (60') is mounted on the at least one clamping member (50'), the at least one opening member (60') switching between the rest position and the contact position when the at least one clamping member (50') is in its proximal position.

10. Fork (2,2') according to claim 7 or 9, wherein the at least one opening member (60') is hinged to the at least one clamping member (50') for switching from the contact position to the rest position according to an oscillatory movement.

11. Fork (2,2') according to any one of claims from 6 to 10, wherein the cutting element (613') of the at least one opening member (60') has a mutually inclined segmented conformation comprising a central segment (6131') and two lateral segments (6133') inclined so as to form with the central segment (6131') an angle less than 180°.

12. Fork (2,2') according to any one of the preceding claims, comprising a first (50) clamping member mounted on the frame (20) at a first distance from the coupling member (30) and a second (50') clamping member mounted on the frame (20) at a second distance from the coupling member (30) different from the first.

13. Fork (2,2') according to any one of the preceding claims, further comprising a decoupling member (70) configured to decouple the bale from the coupling member (30).

14. Machine (1) comprising a connection interface (151) to which a fork (2,2') according to any one of the preceding claims is coupled.

## Patentansprüche

1. Ballengabel (2, 2'), die einen Rahmen (20) umfasst, der mit einer Verbindungsschnittstelle (23) versehen ist, die für den Eingriff mit einem Bewegungselement einer Betätigungsmaschine eingerichtet ist, wobei die folgenden direkt oder indirekt an dem Rahmen (20) angebracht sind:
- ein Kopplungselement (30), das für die mechanische Verbindung mit einem Ballen eingerichtet ist,
- mindestens ein Klemmelement (50, 50'), das derart eingerichtet ist, dass es in mindestens einen ersten Verpackungsabschnitt eines Ballens einhakt und festklemmt, wenn es mechanisch mit dem Kopplungselement (30) gekoppelt ist, wobei das mindestens eine Klemmelement (50, 50') zwischen einer Position proximal zu mit dem Kopplungselement (30) gekoppelten Ballen und einer Position distal zu dem mit dem Kopplungselement (30) gekoppelten Ballen beweglich ist, und
- ein Öffnungselement (60, 60'), das derart eingerichtet ist, dass es auf mindestens einen zweiten Abschnitt der Verpackung einwirkt, wobei sich der mindestens eine erste Abschnitt der Verpackung in einem durch das Klemmelement (50, 50') geklemmten Zustand befindet, um die Verpackung von dem Ballen zu lösen,
wobei das mindestens eine Klemmelement (50, 50') eine Vielzahl von Zähnen (515) und ein mit einer Vielzahl von Zinken (5171) versehenes Kammelement (517) aufweist, und wobei das Kammelement (517) und die Vielzahl von Zähnen (515) in dem mindestens einen Klemmelement (50, 50') relativ zueinander verschiebbar angebracht sind, um zwischen einem Klemmzustand, in dem mindestens ein Zinken (5171) des Kammelements (517) derart eingerichtet ist, dass er mindestens teilweise einen Raum (58) verschließt, der zwischen einem Paar benachbarter Zähne (515) der Vielzahl von Zähnen (515) definiert ist, wodurch der mindestens eine erste Abschnitt der Ballenverpackung zwischen einem Zahn (515) des Paares benachbarter Zähne (515) und dem mindestens einen Zinken (5171) des Kammelements (517) eingeklemmt wird, und einen Freigabezustand umzuschalten, in dem der mindestens eine Zinken (5171) derart eingerichtet ist, dass er den mindestens einen ersten Abschnitt der Ballenverpackung freigibt, der in dem Raum (58) enthalten ist,
**dadurch gekennzeichnet, dass** die Vielzahl von Zähnen (515) derart eingerichtet ist, dass sie zumindest teilweise in den mit dem Kopplungselement (30) gekoppelten Ballen eindringt, und dass das mindestens eine Klemmelement (50, 50') an dem Rahmen (20) angelenkt ist, um von der proximalen Position in die distale Position zu wechseln, indem es um eine Drehachse gedreht wird, und mit dem Rahmen (20) derart verbunden ist, dass es um eine zur Drehachse orthogonale Achse kippt.

2. Gabel (2, 2') nach Anspruch 1, wobei zumindest ein Teil der Vielzahl von Zähnen (515) derart ausgerichtet ist, dass sie eine Zahnreihe bildet, und jeder Zahn der Zahnreihe (515) ein entsprechendes Durchgangsloch (5151) aufweist, das derart eingerichtet ist, dass es das Kammelement (517) verschiebbar aufnimmt, wobei das Kammelement (517) zumindest teilweise verschiebbar in den Durchgangslöchern (5151) der Zahnreihe (515) untergebracht ist.

3. Gabel (2, 2') nach Anspruch 1 oder 2, wobei in der proximalen Position das mindestens eine Klemmelement (50') derart eingerichtet ist, dass es zwischen dem Klemmzustand, in dem es den mindestens einen ersten Abschnitt der mit dem Kopplungselement (30) gekoppelten Ballenverpackung klemmt, und dem Freigabezustand umschaltet, in dem es den mindestens einen Verpackungsabschnitt nicht klemmt.

4. Gabel (2, 2') nach Anspruch 3, wobei das mindestens eine Klemmelement (50, 50') aktiviert werden kann, um von der proximalen Position in die distale Position umzuschalten, wobei der Klemmzustand beibehalten wird, wodurch die Verpackung von dem den Ballen bildenden Material getrennt wird, der mit dem Kopplungselement (30) gekoppelt ist.

5. Gabel (2, 2') nach einem der vorhergehenden Ansprüche, wobei das mindestens eine Klemmelement (50, 50') mit einem Paar von Stellantrieben verbunden ist, die unabhängig voneinander aktiviert werden können, um dem mindestens einen Klemmelement (50, 50') eine Neigung aufzuerlegen.

6. Gabel (2, 2') nach einem der vorhergehenden Ansprüche, wobei das mindestens eine Öffnungselement (60, 60') ein Schneidelement (613, 613') aufweist, das betätigt werden kann, um die mit dem Kopplungselement (30) gekoppelte Ballenverpackung zu durchtrennen.

7. Gabel (2, 2') nach Anspruch 6, wobei das mindestens eine Öffnungselement (60, 60') derart eingerichtet ist, dass es zwischen einer Kontaktposition, in der das Schneidelement (613, 613') in Kontakt mit dem mindestens einen zweiten Abschnitt der mit dem Kopplungselement (30) gekoppelten Ballenverpackung tritt, und einer Ruheposition umschaltet, in der das Schneidelement (613, 613') von der Verpackung entfernt angeordnet ist.

8. Gabel (2, 2') nach Anspruch 7, wobei das mindestens eine Öffnungselement (60) an dem Rahmen (20) angelenkt ist, um entsprechend einer oszillierenden Bewegung von der Kontaktposition in die Ruheposition zu wechseln.

9. Gabel (2, 2') nach Anspruch 7, wobei das mindestens eine Öffnungselement (60') an dem mindestens einen Klemmelement (50') angebracht ist, wobei das mindestens eine Öffnungselement (60') zwischen der Ruheposition und der Kontaktposition wechselt, wenn sich das mindestens eine Klemmelement (50') in seiner proximalen Position befindet.

10. Gabel (2, 2') nach Anspruch 7 oder 9, wobei das mindestens eine Öffnungselement (60') an dem mindestens einen Klemmelement (50') angelenkt ist, um entsprechend einer oszillierenden Bewegung von der Kontaktposition in die Ruheposition zu wechseln.

11. Gabel (2, 2') nach einem der Ansprüche 6 bis 10, wobei das Schneidelement (613') des mindestens einen Öffnungselements (60') eine zueinander geneigte, segmentierte Gestaltung aufweist, die ein zentrales Segment (6131) und zwei seitliche Segmente (6133') aufweist, die derart geneigt sind, dass sie mit dem zentralen Segment (6131') einen Winkel von weniger als 180° bilden.

12. Gabel (2, 2') nach einem der vorhergehenden Ansprüche, aufweisend ein erstes (50) Klemmelement, das an dem Rahmen (20) in einem ersten Abstand von dem Kopplungselement (30) angebracht ist, und einem zweiten (50') Klemmelement, das an dem Rahmen (20) in einem zweiten von dem ersten verschiedenen Abstand von dem Kopplungselement (30) angebracht ist, der sich von dem ersten unterscheidet.

13. Gabel (2, 2') nach einem der vorhergehenden Ansprüche, die ferner ein Entkopplungselement (70) umfasst, das derart eingerichtet ist, dass es den Ballen von dem Kopplungselement (30) entkoppelt.

14. Maschine (1) mit einer Verbindungsschnittstelle (151), an die eine Gabel (2, 2') nach einem der vorhergehenden Ansprüche angekoppelt ist.

## Revendications

1. - Fourche (2,2') à balles comprenant un cadre (20) qui comporte une interface de liaison (23) configurée pour s'engager avec un élément de mouvement d'une machine d'actionnement, ce qui suit étant directement ou indirectement monté sur le cadre (20) :
- un élément de couplage (30) configuré pour se coupler mécaniquement à une balle ;
- au moins un élément de serrage (50, 50') configuré pour accrocher et serrer au moins une première partie d'emballage d'une balle lorsqu'elle est couplée mécaniquement à l'élément de couplage (30), ledit au moins un élément de serrage (50, 50') étant déplaçable entre une position proximale par rapport à la balle couplée à l'élément de couplage (30) et une position distale par rapport à la balle couplée à l'élément de couplage (30) ; et
- un élément d'ouverture (60, 60') configuré pour agir sur au moins une seconde partie de l'emballage avec ladite au moins une première partie de l'emballage dans un état serré par l'élément de serrage (50, 50') de façon à libérer l'emballage à partir de la balle,
dans laquelle ledit au moins un élément de serrage (50, 50') comprend une pluralité de dents (515) et un élément peigne (517) comportant une pluralité de dents (5171), et
dans laquelle l'élément peigne (517) et la pluralité de dents (515) sont montés de manière coulissante dans ledit au moins un élément de serrage (50, 50') l'un par rapport à l'autre de façon à se commuter entre un état de serrage dans lequel au moins une dent (5171) de l'élément peigne (517) est configurée pour obturer au moins partiellement un espace (58) défini entre deux dents adjacentes (515) de la pluralité de dents (515), serrant par là ladite au moins une première partie de l'emballage de balle entre une dent (515) de la paire de dents adjacentes (515) et ladite au moins une dent (5171) de l'élément peigne (517), et un état de libération dans lequel ladite au moins une dent (5171) est configurée pour libérer ladite au moins une première partie de l'emballage de balle comprise dans ledit espace (58),
**caractérisé par le fait que** les différentes dents (515) sont configurées pour pénétrer au moins partiellement dans la balle couplée à l'élément de couplage (30), et **par le fait que** ledit au moins un élément de serrage (50, 50') est articulé au cadre (20) pour se commuter de la position proximale à la position distale, par rotation autour d'un axe de rotation, et est relié au cadre (20) de façon à basculer autour d'un axe orthogonal à l'axe de rotation.

2. - Fourche (2, 2') selon la revendication 1, dans laquelle au moins une partie des différentes dents (515) sont alignées pour former une rangée de dents et chaque dent de la rangée de dents (515) comprend un trou traversant respectif (5151) configuré pour recevoir de manière coulissante l'élément peigne (517), l'élément peigne (517) étant au moins partiellement reçu de manière coulissante dans les trous traversants (5151) de la rangée de dents (515).

3. - Fourche (2, 2') selon l'une des revendications 1 ou 2, dans laquelle, dans la position proximale, ledit au moins un élément de serrage (50') est configuré pour se commuter entre l'état de serrage dans lequel il serre ladite au moins une première partie de l'emballage de balle couplé à l'élément de couplage (30) et l'état de libération dans lequel il ne serre pas ladite au moins une partie d'emballage.

4. - Fourche (2, 2') selon la revendication 3, dans laquelle ledit au moins un élément de serrage (50, 50') peut être activé pour se commuter de la position proximale à la position distale, en maintenant l'état de serrage, séparant par là l'emballage du matériau constituant ladite balle couplée à l'élément de couplage (30).

5. - Fourche (2, 2') selon l'une quelconque des revendications précédentes, dans laquelle ledit au moins un élément de serrage (50, 50') est relié à une paire d'actionneurs qui peuvent être activés indépendamment de façon à imposer une inclinaison sur ledit au moins un élément de serrage (50, 50').

6. - Fourche (2, 2') selon l'une quelconque des revendications précédentes, dans laquelle ledit au moins un élément d'ouverture (60, 60') comprend un élément de coupe (613, 613') qui peut être actionné pour couper l'emballage de balle couplé à l'élément de couplage (30).

7. - Fourche (2, 2') selon la revendication 6, dans laquelle ledit au moins un élément d'ouverture (60, 60') est configuré pour se commuter entre une position de contact, dans laquelle l'élément de coupe (613, 613') entre en contact avec ladite au moins une seconde partie de l'emballage de balle couplé à l'élément de couplage (30), et une position de repos, dans laquelle l'élément de coupe (613, 613') est distant dudit emballage.

8. - Fourche (2,2') selon la revendication 7, dans laquelle ledit au moins un élément d'ouverture (60) est articulé au cadre (20) pour la commutation de la position de contact à la position de repos selon un mouvement oscillatoire.

9. - Fourche (2,2') selon la revendication 7, dans laquelle ledit au moins un élément d'ouverture (60') est monté sur ledit au moins un élémentt de serrage (50'), ledit au moins un élément d'ouverture (60') se commutant entre la position de repos et la position de contact lorsque ledit au moins un élément de serrage (50') est dans sa position proximale.

10. - Fourche (2, 2') selon l'une des revendications 7 ou 9, dans laquelle ledit au moins un élément d'ouverture (60') est articulé audit au moins un élément de serrage (50') pour se commuter de la position de contact à la position de repos selon un mouvement oscillatoire.

11. - Fourche (2,2') selon l'une quelconque des revendications 6 à 10, dans laquelle l'élément de coupe (613') dudit au moins un élément d'ouverture (60') a une conformation segmentée mutuellement inclinée comprenant un segment central (6131') et deux segments latéraux (6133') inclinés de façon à former avec le segment central (6131') un angle inférieur à 180°.

12. - Fourche (2,2') selon l'une quelconque des revendications précédentes, comprenant un premier élément de serrage (50) monté sur le cadre (20) à une première distance de l'élément de couplage (30) et un second élément de serrage (50') monté sur le cadre (20) à une seconde distance de l'élément de couplage (30) différente de la première.

13. - Fourche (2,2') selon l'une quelconque des revendications précédentes, comprenant en outre un élément de découplage (70) configuré pour découpler la balle de l'élément de couplage (30).

14. - Machine (1) comprenant une interface de liaison (151) à laquelle est couplée une fourche (2, 2') selon l'une quelconque des revendications précédentes.
